# DEMANDE DE BREVET EUROPEEN

(11) **EP 1 739 551 A1**
(43) Date de publication de la demande: **03.01.2007**
(21) Numéro de dépôt: 06115790.5
(22) Date de dépôt: 21.06.2006
(51) Int. Cl.: G06F 9/44, G06F 17/27

(54) **Procédé de traitement de données compatible avec un formalisme de modélisation d'objets**

(30) Priorité: 21.06.2005 FR 0551697
(71) Demandeur: ALCATEL, 75008 Paris (FR)
(72) Inventeur: LARVET, Philippe, 91470, FORGES LES BAINS (FR); FONTAINE, Patrick, 75013, PARIS (FR)
(74) Mandataire: Chaffraix, Sylvain

(57) **Abrégé**

L'invention concerne un procédé de réalisation d'un nouveau service web, comprenant les étapes de : décomposition (100) de données, par exemple un scénario (50) et/ou un cas d'utilisation (50), en éléments de modélisation du nouveau service web, conformes à un formalisme de modélisation d'objets ; création (110) d'un modèle objet interne (60) à partir des éléments de modélisation ; et transformation (120, 140) d'éléments de modélisation du modèle objet interne (60) en éléments de modélisation d'un métamodèle externe. Cette dernière étape peut s'accompagner d'une étape de génération (140) d'un code (80) ou de création (120) d'un modèle XMI (70) via un générateur XMI.

L'invention concerne aussi un produit de programme d'ordinateur, adapté à implémenter le procédé selon l'invention, ainsi qu'un fichier informatique obtenu selon ce procédé.

## Description

La présente invention concerne un procédé de réalisation d'un nouveau service vreb, un produit de programme d'ordinateur, adapté à implémenter ce procédé, en particulier un assistant de cas d'utilisation, ainsi qu'un fichier informatique obtenu selon ce procédé.

Dans ce qui suit, les termes suivants sont employés avec le sens indiqué, sauf mention contraire :
- « application informatique » : désigne tout programme ou tout ensemble de programmes prévus pour fonctionner conjointement, dont le but est de rendre des services à leurs utilisateurs.
- « classe » : désigne la notion de classe communément manipulée dans les formalismes de modélisation et langages de programmation orientés objet et notamment l'agrégation de données et de traitements (ou attributs et méthodes, respectivement) destinés à fonctionner ensemble dans une application informatique. Dans les langages orientés objet, chaque type d'objet est définie par sa classe. Une classe représente l'ensemble des objets partageant les mêmes attributs, opérations, méthodes, relations et sémantiques.
- « ligne » : une expression ou suite d'expressions d'un langage symbolique fournissant un renseignement déterminé à un programme de destination, par exemple au compilateur.
- « conteneur » : en programmation orientée objet, un objet comprenant d'autres objets, tel qu'un dictionnaire, et qui fournit les opérations pour accéder à son contenu. Il peut aussi s'agir d'un composant comprenant d'autres composants.
- « code source » : texte écrit dans un langage de programmation ou de description qui est ensuite compilé en langage machine afin d'être exécuté par une plate-forme informatique matérielle, ou interprété par un environnement logiciel ou matériel d'interprétation.
- « code » : désigne indifféremment du code source ou du code compilé.
- « compilation » : action de traduction d'une description exprimée dans un langage de programmation vers le langage natif d'une plate-forme informatique matérielle, avant son exécution par cette plate-forme informatique matérielle.
- « déclaratif » : se dit de données réunies sans que soit indiqué ni nécessaire l'ordre dans lequel elles doivent être utilisées. Lorsque cet ordre est indiqué, la représentation n'est plus déclarative mais procédurale. Les deux notions se recouvrent généralement, au sens ou un langage peut comprendre des parties déclaratives et d'autres parties procédurales.
- « DTD » : (de l'anglais « document type définition », c'est-à-dire définition de type de document), désigne un modèle de structure logique d'un document, permettant de fixer les éléments devant composer le document ainsi que la nature des liens devant relier ces éléments. On utilise également le mot anglais « schema ».
- « génération de code » : désigne ici la production automatique ou semi-automatique de code source pour une application informatique, au moyen d'un générateur. Elle se fait à partir d'une description abstraite d'une d'application logicielle fournie au générateur et servant à piloter cette génération. Celui-ci, après analyse de cette description, construit le code attendu en sortie. Cette description est généralement exprimée dans un langage de plus haut niveau que celui dans lequel le code sera produit. Ainsi on fait souvent le choix d'un langage le plus proche possible de l'expression naturelle humaine, soit sous forme graphique soit sous forme textuelle. Ainsi on peut exploiter le générateur sans avoir à connaître le formalisme du langage de programmation utilisé dans le code généré.
- « héritage » : relation attachant deux classes dans laquelle une « classe de base » hérite des propriétés (attributs et méthodes) d'une « classe-mère », et permettant à la première d'enrichir sa propre définition avec celle de la seconde, tout en conservant toutes ses caractéristiques d'origine. Un héritage est enrichissant (on ajoute à la classe qui hérite les propriétés de la classe héritée) et pas appauvrissant (on ne peut pas ne pas hériter de toutes les propriétés de la classe-mère).
- « HUTN » (pour Human-Usable Textual Notation), désigne un standard de l'OMG (Object Management Group) qui permet de créer et modifier des modèles au format texte avec une syntaxe lisible pour l'homme. Cette syntaxe a été conçue dans le but d'être générique, automatisable et compréhensible par l'utilisateur. HUTN est reconnu comme étant plus « simple » et manifestement plus lisible que XMI car orienté «utilisateur», il se rapproche de langages connus tels que Java, C++.
- « Instance », désigne une occurrence, un exemplaire, un membre individuel d'un type ou d'une classe. Un membre d'une classe est couramment désigné par les termes synonymes d'objet ou d'instance.
- « langage de programmation » : formalisme permettant de décrire des actions destinées à être exécutées par un ordinateur. Ces descriptions sont exécutées par l'ordinateur après compilation ou interprétation. Une application informatique est décrite en utilisant un ou plusieurs langages de programmation. Par le terme « langage », on entend tous les formats de représentation permettant de décrire tout ou partie des logiciels afin de contribuer directement ou indirectement à leur construction effective.
- « métalangage » désigne un langage prend pour objet un autre langage et qui le formalise.
- « métamodélisation » renvoi à la spécification d'un langage de modélisation grâce à un autre langage de modélisation (métalangage), un métamodèle étant un modèle représentant la syntaxe d'un langage.- « modélisation » désigne la représentation abstraite d'un énoncé, d'un problème ou d'un système, réalisée d'une part dans un but de compréhension et de communication de cette compréhension, et d'autre part dans un but de résolution du problème ou d'implémentation concrète du système.
- « Model Driven Architecture » (MDA) désigne un ensemble de Spécifications de l'OMG, lesquelles ont trait à un processus de développement utilisant une suite de modèles. Ces modèles intègrent plusieurs dimensions du projet et s'étendent du modèle fonctionnel au modèle code source. Ces modèles obéissent au standard UML. La progression d'un modèle à l'autre comprend un enrichissement progressif des spécifications de l'application et utilise des transformations autorisées par le méta modèle UML.
- « modélisation orientée objet » désigne un type particulier de modélisation dans laquelle les éléments de modélisation sont des classes, objets, attributs, méthodes, associations, etc. par opposition à "modélisation fonctionnelle" dans laquelle les éléments de modélisation sont des fonctions de traitement et des flux de données. Voir aussi « UML ».
- « MOF » (pour Meta Object Facility) est un langage de métamodélisation proposé par l'OMG et utilisé pour spécifier la syntaxe d'UML et d'autres langages de modélisation.
- « OMG » (pour « Object Management Group »), désigne une organisation dont l'un des buts est de définir des standards afin de garantir la compatibilité entre des applications programmées à l'aide de langages orientés objet (cf. http://www.omg.org).
- « objet » : désigne, en modélisation ou en programmation orientée objet, une instance de classe, constitué d'un ensemble de données (les propres données définitoires de la classe) et des procédures utiles à leur manipulation.
- « orienté objet », se dit par exemple d'un modèle, d'un langage, d'une application ou d'éléments d'applications dont les constituants sont des classes et des objets. Par exemple un langage orienté objet est un langage de programmation dans lequel les composants de base sont des classes, dont les instances - les objets - vivent dynamiquement dans le programme informatique qui les utilise.
- « paquetage » (de l'anglais Package, ce dernier étant le plus couramment usité dans l'art) : désigne tout d'abord un ensemble d'éléments de modélisation (classes ou autres paquetages...) qui sont regroupés afin d'être réutilisés ou de mieux organiser un modèle. Une fois le modèle codé dans le langage de programmation, le paquetage désigne un répertoire (un dossier) de l'ordinateur qui contient des classes ou d'autres paquetages.
- « programmation orientée objet » : type particulier de programmation dans lequel on utilise un langage orienté objet (par exemple Java, C++, C# ou Eiffel) - manipulant des classes et des objets - par opposition à "programmation classique" non objet dans laquelle on ne manipule que des structures de données simples et des "fonctions" de traitement séparées (par exemple C, COBOL, FORTRAN).
- « service Web » désigne une application accessible sur l'INTERNET, via une interface standard, qui peut interagir dynamiquement avec d'autres applications en utilisant des protocoles de communication, par exemple basés sur le XML, et ce, indépendamment du système d'exploitation et des langages de programmation utilisés.
- « SGML» : un langage normalisé permettant de décrire les relations entre le contenu d'un document informatique et sa structure.
- « stéréotype » (stereotype), désigne un type d'élément de modélisation qui étend la sémantique du métamodèle. Les stéréotypes doivent être basés sur certains types ou classes existants dans le métamodèle. Les stéréotypes peuvent étendre la sémantique, mais pas la structure des types et des classes préexistants. Certains stéréotypes sont prédéfinis dans le langage UML, d'autres peuvent être définis par l'utilisateur. Les stéréotypes constituent, avec les "tagged values" et les "annotations", un des trois mécanismes d'extension du langage UML.
- « UML » (Unified Modeling Language, que l'on peut traduire par «langage de modélisation unifié) : désigne une notation (plutôt qu'un langage) de modélisation par objets , permettant de déterminer et de présenter les composants d'un système objet lors de son développement, ainsi que, le cas échéant, d'en générer la documentation. UML est actuellement la norme OMG. Il résulte de la fusion des travaux de Jim Rumbaugh, Grady Booch et Ivar Jacobson et connaît de nombreuses évolutions.
- « XMI » (pour XML Model Interchange), permet de spécifier des règles de correspondances entre métamodèle et "schema". XMI est le standard de l'OMG qui fait la jonction entre le monde des modèles et le monde XML du World Wide Web Consortium (W/3C). Il est utilisé pour représenter des modèles UML sous la forme de fichiers XML.
- « XML » : une évolution du langage SGML, laquelle permet notamment aux concepteurs de documents HTML de définir leurs propres marqueurs, dans le but de personnaliser la structure des données.

On connaît la modélisation dite « modélisation objet », qui consiste à créer une représentation d'éléments du monde réel en termes de classes et d'objets, indépendamment de tout langage de programmation. Par exemple, des classes d'objets sont déterminées, leurs données propres et les fonctions qui les utilisent sont isolées. Divers formalismes existent. UML est l'un de ces formalismes (il s'agît en fait plutôt d'un catalogue de notations). La notation UML s'est imposée dans le courant des années 90, en tant que norme de l'OMG.

Les langages orientés objet constituent chacun une manière spécifique d'implémenter le concept de classe. En particulier, un formalisme objet permet de définir un problème à « haut niveau d'abstraction » sans rentrer dans les spécificités d'un langage donné. Le formalisme UML offre un outil permettant aisément de représenter un problème de façon graphique, le rendant plus accessible aux différents acteurs intervenant dans sa résolution. Il est, à cet égard, souhaitable qu'un formalisme objet soit défini le plus rigoureusement possible, de préférence qu'il soit unique et ce, afin de restreindre au maximum les ambiguïtés.

Typiquement, en vue de la résolution d'un problème donné, il est tout d'abord procédé à une conception abstraite d'un modèle objet. Ensuite, il est procédé à l'implémentation du modèle à l'aide d'un langage orienté objet (tel que C# ou Java).

On connaît par ailleurs des services web (ou WS, de l'anglais « web services »), accessibles depuis une quelconque borne INTERNET, lesquels sont de plus en plus utilisés pour l'élaboration d'applications simples et réutilisables.

Du point de vue de leur complexité, ces WS peuvent être répartis selon deux catégories : les WS élémentaires et les WS composés.

Les WS élémentaires fournissent un service de base, comparable à ceux figurant dans des bibliothèques mathématiques, et contiennent un bas niveau de transformation de données, comptant peu d'algorithmes. Par exemple, des services de traduction sont généralement considérés comme des WS élémentaires.

En revanche, les WS composés sont susceptibles de fournir un service de haut niveau et contiennent plusieurs niveaux d'accès et de transformations de données, issus de la coopération de plusieurs services élémentaires. De tels services sont aussi parfois dénommés « services orchestrés » (ou encore « processus d'interaction »), en référence à l'orchestration requise pour les services élémentaires impliqués. Par exemple, les services de réservation ou les services de paiement sécurisé sont des WS composites orchestrés.

Bien que des services élémentaires puissent être établis et relativement facilement déployés dans des environnements standards connus de l'art, tels qu'Apache/Axis ou .NET platform, il serait néanmoins intéressant de disposer d'un environnement adapté permettant de réaliser et déployer des WS composés, issus d'une agrégation orchestrée de services existants.

Un tel environnement poserait cependant des problèmes quant à l'agrégation de services patrimoniaux et à l'orchestration de ces services, à leur interaction et à la manière dont ils doivent être exécutés pour atteindre leur objectif et fournir le service final, en garantissant une cohérence fonctionnelle de ce service.

A cet égard, diverses techniques d'agrégation existent aujourd'hui. Bien que, dans l'industrie, il n'y ait pas encore de consensus autour d'un langage commun, deux langages sont considérées comme complémentaires :
- WSBPEL (de l'anglais « Web Services Business Process Execution Language ») ou BPEL, qui décrit les interactions entre WS, y compris la logique applicative et l'ordre des interactions ; et
- WS-CDL (Web Services Choreography Description Language), qui décrit des messages échangés entre WS, y compris l'ordre et des contraintes sur ces échanges.

Recourir à BPEL n'est cependant pas la seule manière de décrire une logique applicative : Java ou C# peut également être employé.

Il existe donc un besoin pour un procédé de réalisation d'un nouveau service web permettant de garantir la cohésion fonctionnelle de ce service, et qui n'impose pas de contraintes liées au langage d'implémentation final.

A cet effet, l'invention propose un procédé de réalisation d'un nouveau service web, comprenant les étapes de : décomposition d'une description textuelle en éléments de modélisation du nouveau service web, conformes à un formalisme de modélisation d'objets ; création d'un modèle objet interne à partir des éléments de modélisation ; et transformation d'éléments de modélisation du modèle objet interne en éléments de modélisation d'un métamodèle externe.

Dans des modes de réalisation préférés, le procédé selon l'invention comprend une ou plusieurs des caractéristiques suivantes :
- à l'étape de décomposition, la description textuelle comprend un scénario et/ou un cas d'utilisation ;
- l'étape de décomposition comprend une analyse grammaticale et/ou sémantique des données ;
- l'étape de décomposition comprend en outre l'identification, dans le cas d'utilisation : d'une description générale du nouveau service web ; et de services web existants, susceptibles d'être utilisés par ce service ;
- l'étape de décomposition comprend en outre : l'identification d'acteurs impliqués dans le nouveau services, à partir du cas d'utilisation ; et l'extraction d'entrées - sorties du nouveau service, à partir de la description générale du nouveau service web ;
- l'étape de décomposition comprend en outre une réorganisation de phrases du scénario ; l'étape de décomposition comprend en outre une élaboration de phrases logiques à partir des phrases réorganisées du scénario ;
- le métamodèle externe est un modèle XMI et l'étape de transformation est une étape de création du modèle XMI via un générateur XMI ;
- le procédé comprend, après l'étape de création du modèle XMI : une étape de création d'un modèle UML à partir du modèle XMI créé ;
- le procédé comprend, lors de l'étape de transformation ou après cette étape : une étape de génération d'un code ;
- l'étape de création du modèle objet interne comprend une étape de valorisation d'une structure de données du modèle objet interne ; et la structure de données comprend une pluralité de clauses, chacune de ces clauses est associée à un ou plusieurs élément de modélisation du formalisme, et chacune de ces clauses est entièrement déclarative ;
- chacune desdites clauses se rapporte à un seul élément de modélisation ;
- chacune desdites clauses comprend un code relatif à l'élément de modélisation auquel elle se rapporte et des caractéristiques relatives à cet élément de modélisation ;
- certaines desdites clauses comprennent des caractéristiques relatives à un conteneur de l'élément de modélisation auquel elle se rapporte ;
- le formalisme de modélisation d'objets est le formalisme UML;
- l'un des élément de modélisation du formalisme est : un package, un use case ou cas d'utilisation, une classe, un attribut, une association ou un héritage.

L'invention concerne également un produit de programme d'ordinateur adapté à implémenter le procédé de l'invention.

L'invention concerne en outre un fichier informatique obtenu selon le procédé de l'invention.

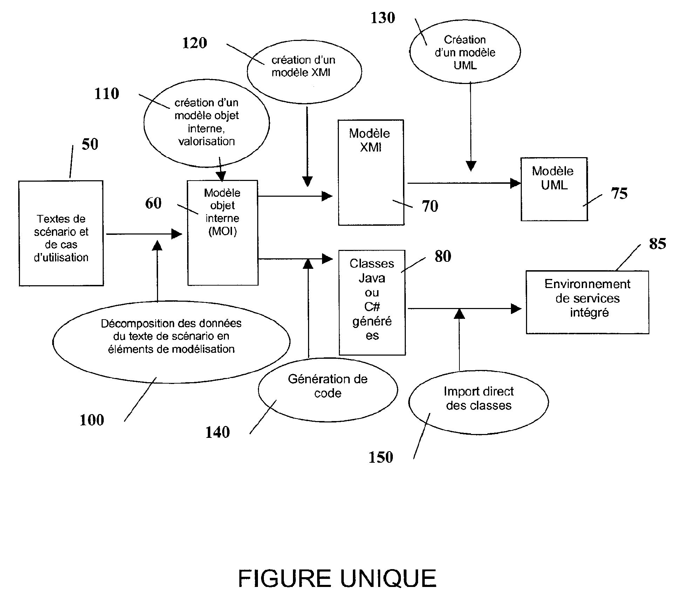

D'autres caractéristiques et avantages de l'invention apparaîtront à la lecture de la description détaillée qui suit des modes de réalisation de l'invention, donnés à titre d'exemple uniquement et en références à des exemples, ainsi qu'à la figure unique, qui montre un diagramme représentant schématiquement certaines étapes d'un procédé selon un mode de réalisation de l'invention.

L'invention propose un procédé de réalisation d'un nouveau service web, un produit de programme d'ordinateur, adapté à implémenter ce procédé ainsi qu'un fichier informatique obtenu selon ce procédé.

Le procédé selon l'invention comprend une première étape de décomposition d'une description textuelle (typiquement un scénario et un cas d'utilisation) en éléments de modélisation d'un formalisme de modélisation d'objets, par exemple le formalisme UML. Le scénario et le cas d'utilisation décrivent le fonctionnement détaillé du futur « processus d'interaction », en termes d'interactions entre les opérations de services existants. Le cas d'utilisation s'apparente à une description générale, tandis que le scénario a trait à une description détaillée, fonctionnelle d'un cas particulier, comme il est connu de l'art. Le cas échéant, plusieurs textes de scénarios peuvent être utilisés par le procédé.

Le scénario et le cas d'utilisation peuvent éventuellement être exprimés sous la forme de textes semi formels, au cours de cette première étape ou en amont de celle-ci. Cette étape fait de préférence appel à une analyse grammaticale et/ou sémantique. C'est, le cas échéant, au cours de cette première étape que sont identifiés la description générale du nouveau service web et que des services web existants, susceptibles d'être utilisés par ce nouveau service.

Le procédé comprend en outre une étape de création d'un modèle objet interne (MOI) à partir des éléments de modélisation. Ce MOI sert de piler, il est de préférence masqué, c'est-à-dire transparent pour l'utilisateur.

Vient ensuite une étape de transformation d'éléments de modélisation du modèle objet interne en éléments de modélisation d'un métamodèle externe. Cette opération peut par exemple s'accompagner d'une l'étape de génération de code, dans un langage objet quelconque (Java, C++, C#, Ada, etc.) ou de création d'un modèle XMI.

Le passage par le MOI garanti une cohésion fonctionnelle du futur service, c'est-à-dire du processus d'affaire, et permet un bon déroulement des transformations d'un modèle à un autre. A cet effet, le mécanisme de construction du service est de préférence basée sur l'approche MDA. Notons que l'approche choisie est agnostique (du fait de l'utilisation d'éléments de modélisation au sens objet). En outre, les descriptions contenues dans les données (cas d'utilisation/scénario) sont fonctionnelles. Par conséquent, le procédé n'induit pas de contraintes liées au langage d'implémentation final.

Recourir à un MOI s'avère par ailleurs avantageux lorsque l'on désire produire facilement aussi bien des modèles objets, par exemple conformes à UML, que des programmes sources, dans un langage objet quelconque. Le MOI joue alors le rôle d'interlocuteur multilingue. Il est, à cet égard, particulièrement avantageux de conformer le MOI à une structure de données spécifique, particulièrement bien adaptée à la représentation de modèles UML ou à une génération facile de programmes sources.

Ces programmes sources, un fois produits, sont alors susceptibles d'être déployés. On dispose ainsi d'un environnement permettant de déployer facilement le service composé final, afin de le mettre à la disposition des utilisateurs finals.

Dans ce qui suit, un mode de réalisation préféré du procédé de l'invention est décrit à travers d'un exemple dans une première partie. Dans cette première partie, on s'attache surtout à décrire les étapes de décomposition de données et de création du MOI. Ensuite, dans une deuxième partie, une structure de données particulièrement avantageuse pour le MOI sera décrite plus en détails. Cette structure de donnée est conforme à une notation qui sera ci-après dénommée notation « FIL » pour « format interchange language » ou encore « Formal Internal modeling Language »). La troisième partie est consacrée à la génération de code source et au déploiement de services.

### I. Description du procédé selon l'invention mis en oeuvre par un assistant de cas d'utilisation, à travers un exemple

Les concepts généraux évoqués ci-dessus sont maintenant décrit par rapport à un exemple simple de processus d'affaire.

Nous supposons qu'une librairie de services web comprend plusieurs services élémentaires :
- un service de transmission de messages, permettant d'envoyer des SMS, des lettres fax ou des courriels à des destinataires donnés ;
- un service de répertoire, c'est-à-dire un service général permettant d'obtenir des données spécifiques à un utilisateur donné, par exemple son adresse de courriel ou une liste de ses contacts ; et
- un service de préférences d'utilisateur, lequel gère les préférences associées à chaque utilisateur.

### I.0 Description du nouveau service

En référence à la figure : à l'aide des composantes élémentaires décrites ci-dessus, supposons maintenant que nous souhaitions mettre en place un nouveau service, qu'un premier acteur, un analyste, décrit d'une façon imprécise à travers le cas d'utilisation 50 suivant :
Le nom du nouveau service (que l'on souhaite créer) est : "Broadcast Message". Avec ce nouveau service, l'utilisateur souhaite diffuser un message donné vers plusieurs récepteurs, en fonction de leurs préférences de messagerie. Le nouveau *service utilise des services existants mais, à ce niveau (n'étant que l'analyste et non le développeur du service), j'ignore leurs noms exacts...*

L' analyste complète cette description à l'aide du scénario 50 suivant :
*L'utilisateur donne son nom, et le nouveau service récupère (à partir de ce nom) la liste des contacts de l'utilisateur (aussi appelée "contact list"). Ensuite, pour chaque contact de cette liste, le nouveau service récupère le type de messagerie correspondant au contact et, en fonction de ce type, il envoie un SMS, un fax ou* un courriel vers le contact.

Compte-tenu de la finalité de l'invention, il est opportun de donner le texte anglais correspondant :
Use Case:
   *The name of the new service is: Broadcast Message. With this new service, the user wants to broadcast a message to several receivers, according to their messaging preferences. The new service uses some existing services but, at this level, I, analyst, ignore their exact names...*
Scenario: (Description of the new service)
   *The user gives his name, and the new service gets his corresponding contact list. Then, for each contact of this list, the new service gets the type of messaging corresponding to the contact, and according to this type, it sends a SMS, a Fax* or an e-mail to the contact.

Un assistant de cas d'utilisation, adapté à implémenter le procédé selon l'invention, opère une décomposition 100 des données ci-dessus en éléments de modélisation du nouveau service web, conformes à un formalisme de modélisation d'objets, par exemple UML.

Cette décomposition 100 comprend de préférence plusieurs transformations, qui vont être décrites ci-après.

Typiquement, les données du scénario et du cas d'utilisation sont fournies en langue anglaise, comme il est usuel dans l'art. Dans un premier temps, les transformations opérées sur les textes seront illustrées en anglais et aussi en français, à des fins de clarté. Cependant, à l'issue de certaines étapes, l'évolution de la description du cas d'utilisation et du scénario ne sera illustrée qu'à l'aide d'instructions utilisant des mots anglais, comme il d'usage dans l'art des « développeurs ». On peut cependant envisager des modes de réalisation de l'invention dans lesquels d'autres langues seraient supportées.

Grâce à la description donnée ci-dessus, plutôt imprécise, l'assistant de cas d'utilisation exécute une série de transformations pas-à-pas, jusqu'à l'obtention 120, 140 d'éléments d'un métamodèle externe 70 tel que XMI ou d'un code source 80 correspondant au nouveau service, compilable exécutable et susceptible d'être déployé.

### I.1 Première transformation du texte correspondant au nouveau service en un modèle semi formel

Une première transformation susceptible d'être opérée par l'assistant consiste en un réarrangement du texte afin de lui donner une forme qui soit « traitable » informatiquement (on parle aussi dans l'art de forme « machinable »). Cette transformation peut comprendre deux sous étapes : une première sous étape de reformulation et une deuxième sous étape de remplissage du modèle semi formel.

La première sous étape de reformulation du texte comprend une analyse grammaticale du texte. Cette analyse est par exemple effectuée par un module d'analyse grammaticale idoine de l'assistant, capable d'effectuer des reconstructions de phrases.

A cet égard, notons que l'on connaît des outils permettant d'effectuer une analyse grammaticale d'un texte, par exemple Grammatica, qui est un vérificateur grammatical et orthographique de textes français et anglais. Outre des suggestions, il fournit des explications. Grammatica analyse la fonction des mots (texte et liens grammaticaux, homophones et homographes, synonymes et définition en français). Le lecteur peut consulter le site vwwr.zdnet.fr. Autre exemple, les outils de Lexiquest, qui font de l'analyse de texte et du "text mining" : www.lexiquest.com.

Le module d'analyse grammaticale de l'assistant est typiquement apte à :
- distinguer clairement la partie « cas d'utilisation » de la partie « scénario » des données ;
- identifier, dans la partie « cas d'utilisation », les sous parties suivantes :
   o nom du nouveau service ;
   o description générale du nouveau service ; et
   o identification des services existants susceptibles d'être utilisés pour la conception du nouveau service ; et
- dans la partie « scénario » :
   o décomposer le texte en phrases séparées ;
   o réorganiser ces phrases afin de leur donner une première tournure d'instructions de programmation.

### Après ces opérations, un résultat obtenu est par exemple le suivant :

### CAS D'UTILISATION

Nom du nouveau service: Broadcast Message.
Description générale: [ avec ce nouveau service, ] l'utilisateur veut diffuser un message à plusieurs récepteurs, en fonction de leurs préférences de messagerie.
Services existants employés : Le nouveau service utilise des services existants mais, [ à ce niveau, n'étant que l'analyste et non le développeur du service, j'ignore leurs noms exacts. ] = à cette étape, ils sont encore inconnus.

### SCENARIO

Description détaillée :
- L'utilisateur donne son nom
- le nouveau service récupère la liste des contacts de l'utilisateur
- Pour chaque contact de cette liste :
   o le nouveau service récupère le type de messagerie correspondant à ce contact
   o en fonction de ce type de messagerie
      ■ le nouveau service envoie un SMS ou
      ■ le nouveau service envoie un Fax ou
      ■ le nouveau service envoie un courriel au contact.

Notons que l'on obtient, à partir de la version en langue anglaise des textes de scénario et de cas d'utilisation, la description suivante :

### USE CASE

Name of the new service: Broadcast Message.
General description: [With this new service,] the user wants to broadcast a message to several receivers, according to their messaging preferences.
Existing services used: The new service uses some existing services but, [at this level, I, analyst, ignore their exact names.] = at this step, they are still unknown.

### SCENARIO

Detailed description:
- the user gives his name,
- the new service gets the contact list of the user
- for each contact of this list:
   ° the new service gets the type of messaging corresponding to the contact,
   ° according to the type of messaging:
      ■ the new service sends a SMS, or
      ■ the new service sends a Fax, or
      ■ the new service sends an e-mail to the contact.

La deuxième sous-étape comprend une extraction détaillée de l'information pertinente comprise dans le texte, afin de remplir le modèle semi formel, lequel sera ensuite utilisé afin de générer le code source correspondant au nouveau service.

A l'aide d'un extracteur grammatical idoine, les opérations suivantes sont effectuées :
- Dans la partie « cas d'utilisation » :
   o L'identification du nom du nouveau service ;
   o L'identification des acteurs : acteur initial et acteur final (plusieurs, le cas échéant) ;
   o L'extraction (si possible) de la description générale du service ;*
   o L'extraction (si possible) des principales entrées-sorties du service, typiquement exprimées sous la forme « l'utilisateur donne au service ... », « le service retourne à l'utilisateur ... », etc.
- Dans la partie « scénario » :
   o A partir de phrases séparées, l'élaboration de « phrases logiques », c'est-à-dire soit des phrases indépendantes, soit des parties de phrases destinées à devenir des instructions ;
   o L'identification d'éléments de programmation nécessaires (par exemple « if ... then ... else », « « switch ... case », « for each ... », etc.).

Les résultats de ces opérations sont par exemple stockés dans des champs correspondants du modèle semi formel, comme représenté ci-après.

Cas d'utilisation pour le processus d'interaction de transmission de messages

### ACTEURS

Les acteurs sont: l'utilisateur (diffuseur de message) et les récepteurs.

### CAS D'UTILISATION

Cas d'utilisation impactant l'acteur : utilisateur (diffuseur de message)

Nom du cas d'utilisation : Broadcast Message

Nom du service : processus d'interaction transmission de messages

Description: L'utilisateur veut diffuser un message à plusieurs récepteurs, selon leurs préférences de messagerie.

Entrées: L'utilisateur fournit au service les données suivantes:
- son nom d'expéditeur,
- le message.

Sorties: Le service retourne à l'utilisateur:
- aucune donnée spécifique.

Exceptions: Aucune exception jusqu'à maintenant.

Services existants utilisés: Le nouveau service utilise des services existants mais, à cette étape, ils sont encore inconnus.

### SCENARIO

Scénario pour le nouveau service : Broadcast Message
* Le nouveau service obtient la liste des contacts de l'expéditeur à partir du nom de l'utilisateur.
* Pour chaque contact de cette liste:
   * obtenir le type de messagerie correspondant au contact
* selon le type de messagerie:
* si Sms:
   * envoyez un SMS au contact
* si Fax:
   * envoyez un Fax au contact
* si courriel:
   * envoyez un Courriel au contact

Et, de façon correspondante, en anglais :
Use Case for Messaging Business Process

### ACTORS

The actors are: the User (message broadcaster) and the Receivers.

### USE CASES

Use cases impacting the Actor: User (message broadcaster)

Use case name: Broadcast Message

Service name: Messaging Business Process

Description: The User wants to broadcast a message to several Receivers, according to their messaging preferences.

Inputs: The User gives to the service the following data:
- his sender's name,
- the message.

Outputs: The service returns to the User:
- no specific data.

Exceptions: No exception for now.

Existing services used: The new service uses some existing services but, at this step, they are still unknown.

### SCENARIO

Scenario for the new service: Broadcast Message
* The new service gets the sender's contact list from the user's name.
* For each contact of this list:
   * get the type of messaging corresponding to the contact
* according to the type of messaging:
* if Sms:
   * send a SMS to the contact
* if Fax:
   * send a Fax to the contact
* if Email
   * send an e-mail to the contact

Une telle description semi formelle présente notamment deux avantages : elle est d'une part lisible par un utilisateur et est pratiquement traitable informatiquement à ce stade. Trois sortes d'éléments peuvent être ajoutés à ce stade, afin de permettre une exploitation informatique de cette description :
- les noms ou identificateurs des services existants à utiliser ;
- les noms et signatures des méthodes (au sens objet) devant être utilisées par ces services ;
- les noms et types de paramètres utilisés par ces méthodes ;

Dans le présent mode de réalisation et dans l'exemple décrit, ces éléments sont ajoutés lors d'une deuxième transformation, décrite ci-après. Cependant, il est possible d'envisager des modes de réalisation dans lesquels ces éléments seraient attribués par défaut ou encore, directement par l'utilisateur lui-même - on serait, dans ce dernier cas, dans un mode de fonctionnement non automatique.

### 1.2 Finalisation du modèle formel

La première transformation utilisait une analyse grammaticale. Celle qui est décrite maintenant se base davantage sur une analyse sémantique. Les services (patrimoniaux) existants sont par exemple décrits, dans la librairie de services, en langage WSDL, de sorte à pouvoir décrire des services du type XMI, comme il est connu de l'art (voir à ce sujet le site www.w3.org, et en particulier www.w3.org/TR/wsdl).

A partir de la description WSDL d'un service web donné, un module spécifique de l'assistant de cas d'utilisation exécute de préférence les opérations suivantes :
- il passe en revue les pseudo instructions (c'est-à-dire : semi formelles) du scénario ;
- il extrait à partir de ces instructions les "conditions de service", c'est-à-dire les besoins concernant les services devant être adaptés aux services existants.
- il compare ces conditions avec les signatures et paramètres des méthodes de service (compte tenu de ce qu'ils sont décrits en WSDL).
- il remplace une condition par la « vraie » signature de la méthode du service si une correspondance satisfaisante est trouvée entre le besoin original et la signature d'une méthode appartenant à un service web patrimonial.

Ce module de transformation peut en outre compléter, le cas échéant, les informations de « services existants utilisés » du modèle semi formel.

On obtient alors par exemple la description suivante, dans laquelle les noms de services ou d'opérations, par exemple « GetEmailAddress » sont typiquement façonnés d'après des terminologies anglaises, comme il est d'usage dans l'art :
CAS D'UTILISATION
···
Services existants utilisés: Le nouveau service utilise les services existants suivants:
   * Directory Service,
   * Messaging Service,
   * User Preference Service.
SCENARIOS
Scénario pour le nouveau service : Broadcast Message
   * Le nouveau service obtient l'adresse courriel de l'expéditeur en invoquant l'opération GetEmailAddress du Service Directory Service, avec le paramètre nom d'utilisateur.
   * Le nouveau service obtient la liste de contacts de l'expéditeur en invoquant l'opération GetMyContactList du Service Directory Service, avec le paramètre nom d'utilisateur.
   * Pour chaque élément de cette liste de contacts de l'expéditeur, le nouveau service opère de la façon suivante:
   * obtenir le type de messageries en invoquant l'opération GetMessagePreference du Service User Preference Service , avec le paramètre nom du contact,
   * selon le type de messagerie:
   * si SMS :
      * invoquer l'opération SendSMS du Service MessagingService, avec les paramètres numéros de téléphone mobile du contact et message
   * si Fax :
      * invoquer l'opération SendFax du Service MessagingService, avec les paramètres numéros de Fax et message
   * si courriel :
      * invoquer l'opération SendMail du Service MessagingService, avec les paramètres adresse courriel du contact et message.

De même, en langue anglaise :
USE CASES
···
Existing services used: The new service uses the following existing services:
   * Directory Service,
   * Messaging Service,
   * User Preference Service.
SCENARIOS
Scenario for the new service: Broadcast Message
   * The new service gets the sender's email address by invoking the operation GetEmailAddress of Directory Service, with the parameter sender's name.
   * The new service gets the sender's contact list by invoking the operation GetMyContactList of Directory Service, with the parameter sender's name.
   * For each element of the sender's contact list, the new service works as follows:
   * get the messaging type by invoking the operation
      GetMessagePreference of User Preference Service, with the parameter contact name,
      * according to the messaging type:
      * if SMS:
         * invoke the operation SendSMS of Messaging Service, with the parameters contact Mobile phone number and message
      * if Fax:
         * invoke the operation SendFax of Messaging Service, with the parameters contact Fax number and message
      * if e-mail:
         * invoke the operation SendMail of Messaging Service, with the parameters contact Email address and message

Notons que les opérations Sendmail, SendSMS, etc. sont des éléments de modélisation au sens de l'invention.

Après ces nouveaux ajouts, l'assistant peut, le cas échéant, contrôler la cohérence de la description obtenue, en comparant les signatures et paramètres sélectionnés par le second module de transformation avec les description WSDL originales des services de répertoire patrimoniaux. Une commande spécifique de l'assistant permet par exemple de trouver et mémoriser les descriptions de service requises par le texte original du scénario, pour les comparer plus tard aux descriptions WSDL choisies par le module automatique de la deuxième transformation.

En suite à ce contrôle de cohérence, le réalisateur a par exemple la capacité de corriger les choix opérés par l'assistant et d'imposer à la place ses propres choix de services.

### I.3 Elaboration du modèle objet interne du scénario

Le procédé selon l'invention mis en oeuvre par l'assistant comprend une étape centrale de création 110 d'un modèle objet interne 60 à partir des éléments de modélisation du nouveau service web.

Cette étape peut par exemple utiliser un patron incorporé de transformation texte - langage formel ainsi que des patrons de transformation WSDL - langage formel. Le rôle de ces patrons est ainsi de traduire le texte semi formel du cas d'utilisation et du scénario, de même que les descriptions de services WSDL patrimoniaux, en un MOI formel.

Le MOI 60 peut par exemple utiliser une structure de données spécifique (aussi dénotée par l'acronyme FIL), laquelle sera décrite plus en détails dans la deuxième partie. Comme évoqué plus haut, le MOI permet notamment de générer facilement du code, tout en assurant une cohérence fonctionnelle lors des diverses transformations impliquées et ainsi, une cohérence du service final.

Avant « d'appliquer » le patron de transformation texte - MOI (soit texte - FIL dans le présent mode de réalisation), il est de préférence recouru à un patron élémentaire de traitement par mots-clés, lequel opère sur le texte de scénario issu de la deuxième transformation, afin de transformer les pseudo instructions lisibles par l'utilisateur en instructions exploitables informatiquement.

A cette fin, des mots non significatifs, tels que « the », « service », « invoke », « operation », « parameter », etc., peuvent tout d'abord être éliminés. Ensuite, le patron de traitement par mots-clés peut par exemple remplacer des mots clés prédéfinis (tels que « get », « with », « from », « of », etc.) et réorganiser chaque pseudo instruction afin de leur donner une forme finale d'instruction de programmation.

Par exemple, considérons la phrase suivante du scénario évoqué plus haut, en langue anglaise :
The new service gets the sonder's email address by invoking the operation GetEmailAddress of Directory Service, with the parameter sender's name.
Cette phrase a une correspondance connue dans le monde « développeur ». Par exemple :
- l'obtention (cf. « gets ») des données « A » en invoquant l'opération « B » s'écrit par le développeur : A = B() ;
- l'opération « B » du service « S » s'écrit : S.B().
Ainsi, la phrase ci-dessus se traduit, dans le monde développeur, par :
sender_email_address = DirectoryService.GetEmailAddress(sender_name);
De la sorte, on obtient, après opération du modèle de traitement par mots clés :
Scenario for the new service: Broadcast Message
sender_contact_list = DirectoryService.GetMyContactList(sender_name);
foreach element of sender_contact_list:
messaging_type = UserPreferenceService.GetMessagePreference(contact.name) ;
switch (messaging_type):
case SMS: MessagingService.SendSMS(contact.Mobile_phone_number, message);
case Fax: MessagingService.SendFax(contact.Fax_number, message);
case Email: MessagingService.SendMail(contact.Email_address, message);

Il reste à présent à appliquer le patron de transformation texte - MOI, lequel représente un troisième niveau de transformation (il s'agît en fait davantage d'une traduction à ce niveau), amenant au format FIL le texte semi formel complet du cas d'utilisation et du scénario. On obtient ainsi (extrait) :

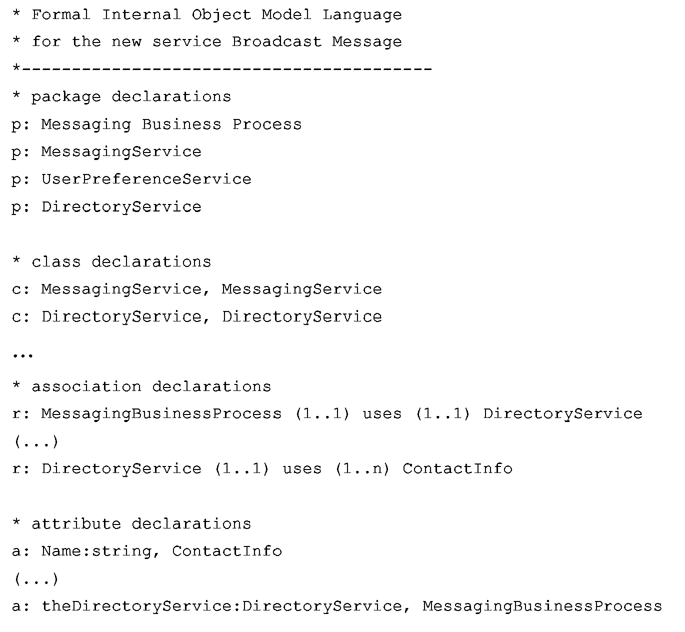

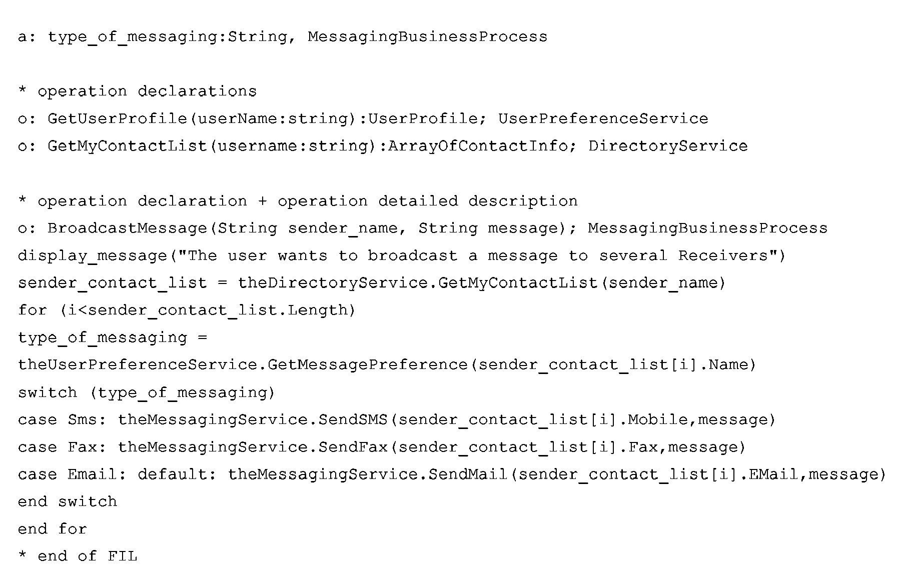

Les lignes précédées de « * » sont des commentaires. Les lettres clés suivies de « : » distinguent des éléments de modélisation du nouveau service (par exemple la relation « MessagingBusinessProcess (1..1) uses (1..1) DirectoryService »), impliquant le cas échéant des services existants (dans cet exemple « DirectoryService »).

La notation FIL reflète le modèle interne du nouveau service, exprimé d'une manière formelle et stocké par exemple dans une base de données propriétaire de l'assistant de cas d'utilisation. Cette notation est explicitée dans la partie suivante.

### II. Structure de données du modèle objet interne conforme à la notation FIL

### II.0 Contexte, définitions

En préalable à la description détaillée d'une structure de donnée au format FIL, il convient de rappeler que la notation UML, telle qu'elle est actuellement normalisée, ne dispose d'aucune notation textuelle permettant de représenter les modèles objets. Seule une représentation graphique est proposée dans la norme pour les différents diagrammes UML (diagramme de classes, d'interactions, d'états - transitions, etc.) mais aucune contrepartie textuelle de cette représentation graphique n'est proposée dans la norme UML. XMI n'a pas été conçu pour être « lisible », c'est-à-dire qu'il n'est pas compréhensible par un utilisateur humain. Par ailleurs, il n'est pas autosuffisant. La syntaxe HUTN a été conçue dans le but d'être compréhensible par l'utilisateur. Il reste que HUTN est un langage procédural, c'est-à-dire que l'ordre des lignes est d'une importance critique pour l'interprétation de ce langage.

Dans ce contexte, il est particulièrement souhaitable de disposer d'une structure de données, exploitable informatiquement et qui permette de représenter des modèles UML ainsi que de générer facilement des programmes sources, dans un langage objet quelconque. Il est également souhaitable que cette structure de données soit simple et légère à manipuler et, une fois réifiée, compréhensible par l'utilisateur.

Par « structure de données », on entend tout d'abord la structure effective des données telles qu'elles sont manipulées dans la représentation interne du programme qui les exploite. On entend cependant également par « structure de données » la structure des informations présentes dans un fichier, telle qu'elle apparaîtrait lors de l'édition de ce fichier ou lors de son impression. Ce fichier pourrait par exemple être un fichier de réification de la « structure de données » ci-dessus, telle qu'entendue dans son premier sens.

### II.1 Caractéristiques générales de la structure de données FIL

Cette structure de données est la représentation d'un formalisme de modélisation d'objets comprenant une pluralité d'éléments de modélisation. Par « représentation d'un formalisme de modélisation d'objets », on entend que l'exploitation de la structure de données permet notamment une représentation graphique selon ce formalisme. Ce dernier pourrait par exemple se restreindre à la notation UML, auquel cas les éléments de modélisation sont les éléments classiquement manipulés par UML, c'est-à-dire des paquetages, classes, attributs, opérations, associations, cardinalités, héritages, etc.

La structure de données proposée comprend une pluralité de clauses, par exemple des clauses logiques valorisables ou manipulables par un programme. Chacune de ces clauses est associée à un ou plusieurs élément(s) de modélisation du formalisme et chacune de ces clauses est entièrement déclarative.

Cette structure de données est simple. Une fois la structure de données réifiée, par exemple dans un fichier, chaque clause devient une ligne de ce fichier, utilisant une notation formelle. Or, étant donné que chaque clause est entièrement déclarative, l'ordre de ces clauses et par conséquent l'ordre des lignes du fichier, n'affecte pas leur interprétation. La compréhension du fichier par un utilisateur s'en trouve simplifiée.

De préférence, chaque clause correspond à un seul élément de modélisation, ce qui simplifie à la fois le traitement algorithmique de la structure de données ainsi que la compréhension par l'utilisateur d'un fichier construit à partir de cette structure de données.

En outre, chaque clause est de préférence autosuffisante, de sorte à en permettre l'interprétation sans devoir accéder pour cela à une autre clause.

La structure de données se représente par une notation formelle de haut niveau. Ceci permet la mise en oeuvre des procédés de traitement de données à la fois simples et intégrés. Il peut s'agir par exemple de procédés pour transcrire et représenter des modèles UML, lesquels sont habituellement décrits sous la forme de diagrammes et de schémas graphiques auxquels sont associés des textes non formels et dont la structure n'est pas normalisée. Cette structure de données permet en outre, via des traitements informatiques appropriés, de produire facilement aussi bien des modèles objets conformes à UML, que des programmes sources, dans un langage objet quelconque (Java, C++, C#, Ada, etc.). Ceci sera détaillé plus loin dans la description.

Cette structure de données se substitue ainsi avantageusement aux alternatives actuellement proposées, qui, s'appuyant sur XMI/XML ou sur HUTN, n'offrent pas d'outil qui soit à la fois simple, léger et apte à générer facilement du code.

Dans ce qui suit, la structure de données FIL est décrite en référence à un fichier de réification de cette structure de données, pour des raisons d'intelligibilité. Il n'en demeure pas moins qu'à une ligne de ce fichier peut correspondre une clause logique, interprétable par un programme informatique.

### II.2 Caractéristiques formelles de la structure de données FIL

De préférence, chaque ligne FIL du fichier comprend un code relatif à l'élément de modélisation auquel elle se rapporte, le cas échéant un simple caractère précisant le type d'élément décrit. On pourra par exemple utiliser le caractère « a » pour un attribut, « c » pour classe, « h » pour héritage, « r » pour relation, etc. Chaque ligne comprend en outre un corps comprenant des caractéristiques relatives à cet élément. Ceci permet de disposer d'une structure apte à une exploitation de la ligne par une application informatique. Le repérage de l'élément par l'utilisateur est en outre facilité par la présence du code correspondant.

Considérons par exemple la phrase suivante : « un chat mange des souris ». Cette phrase établi une relation entre « un chat » et « des souris ». Cette relation peut être codée, selon la notation FIL, dans la ligne suivante :
r: chat (1..1) manger (1..n) souris
où le caractère « r » précise que l'élément de modélisation en question est une relation, (1..1) et (1..n) renvoient aux cardinalités correspondant respectivement à (un) chat et (des) souris.

D'autres exemples seront détaillés par la suite.

De préférence, le corps de certaines lignes FIL comprend deux parties, la première comprenant des caractéristiques intrinsèques à l'élément de modélisation (par exemple une valeur de type pour un attribut) et la deuxième partie comprenant des caractéristiques relatives à un conteneur de l'élément de modélisation. On déclare ainsi un élément, directement en liaison avec son conteneur. Cependant, la déclaration a trait principalement audit élément de modélisation, le conteneur pouvant faire l'objet d'une déclaration indépendante. Ainsi, les déclarations correspondantes (c'est-à-dire des clauses ou des lignes de fichier) restent indépendantes. De la sorte, on met en place une structure de fichier permettant ultérieurement à une application de reconstruire des hiérarchies entre les divers éléments.

Les exemples détaillés qui suivent entrent dans le cadre d'un mode de réalisation particulier, dans lequel les lignes FIL sont triées par type, pour des raisons de lisibilité, par exemple dans l'ordre indicatif suivant : packages, classes, attributs, opérations, associations, héritages. Ceci permet d'appréhender plus facilement les éléments ainsi que leurs relations. Il convient néanmoins de garder à l'esprit que ces lignes peuvent être déclarées ou stockées en mémoire dans un ordre quelconque. Les codes précisant les éléments se réduisent à une lettre, minuscule, en première position sur la ligne. Un caractère «:» (deux points) figure immédiatement après, suivi d'un espace, comme illustré dans l'exemple ci-dessus. En outre, une virgule (s'il y en a une) est toujours suivie d'un espace. D'autres règles de syntaxe peuvent en outre être observées, comme il apparaîtra dans ces exemples.

Le cas échéant, un outil informatique d'exploitation, i.e. de production et/ou de traitement d'une structure de données, peut être intégré à l'assistant, ou, du moins, l'assistant peut en comprendre les fonctionnalités.

Cet outil peut être adapté à valoriser la structure de données, c'est-à-dire à affecter des valeurs correspondant aux données. Il peut en outre être adapté à accéder cette structure, c'est-à-dire à pouvoir en extraire des valeurs et/ou à manipuler la structure de données (soit en remplacer les valeurs). En particulier, cet outil est adapté à interpréter les lignes FIL d'un fichier. Le cas échéant, il peut être muni de routines chargées de corriger ou d'interpréter des défauts de syntaxe ou des syntaxes incomplètes. Les lignes peuvent être stockées en mémoire dans un ordre quelconque.

### II.3 Exemples

### Exemple 1

La déclaration d'un attribut se fait comme suit:
a: nom attribut, nom de classe
   où « nom attribut » et « nom de classe » renvoient logiquement au nom de l'attribut et de la classe à laquelle appartient l'attribut, la virgule faisant office de séparateur.

### Exemple 2

a: nom attribut:type, nom de classe

Dans cet exemple, un attribut est déclaré avec son type. De préférence, il n'y a pas d'espace, ni avant, ni après «:type». Les types standard sont par exemple « String », « boolean », « int » ou « integer », « Date », comme il est usuel dans l'art. D'autres types peuvent être utilisés, y compris les noms des classes décrites dans la notation elle-même. On aura alors par exemple :
a: nom attribut:classe un, classe deux

### Exemple 3

a: attribut=valeur, nom de classe

Ici, une valeur initiale est affectée à l'attribut. Il n'y a de préférence pas d'espace, ni avant ni après le signe égal. On peut noter qu'une syntaxe incomplète (à l'instar de l'exemple ci-dessus où il manque le type de l'attribut) pourra avantageusement être interprétée par l'outil d'exploitation. Par exemple, l'outil en question peut être conçu de sorte à interpréter et trouver automatiquement le type qui convient en tenant compte de plusieurs critères. Ces critères peuvent par exemple se baser sur le nom de l'attribut lui-même, tel que "numéro", "montant", "compteur", etc., l'outil d'exploitation proposant alors par défaut le type "integer". Ils peuvent par ailleurs se baser sur la valeur associée à l'attribut. Par exemple, si la valeur est "vrai", "faux", "true" ou "false", le type proposé est "boolean"; si la valeur est numérique, le type proposé est "integer" ou "real" selon qu'elle contient ou non des décimales ; si la valeur est entourée de doubles quotes " ", le type proposé est "String" (pour chaîne de caractères), etc. Ainsi, dans de nombreux cas, la mention du type peut être superflue, car le type peut être rétabli par l'outil.

### Exemple 4

a: attribut:type=valeur, nom classe

Dans cet exemple, la syntaxe est complète.

### Exemple 5

c: nom de classe[, nom de package]

Ici, une classe est déclarée, ainsi que [, son package d'appartenance]. Les crochets indiquent ici le caractère optionnel de la mention du nom de package. Par exemple, si le package n'est pas mentionné et s'il n'y a pas de package précédemment rencontré, la classe pourra être rangée systématiquement dans un package donné, par exemple le package "p_système", qui sera alors considéré comme le package de plus haut niveau. Ce package peut par exemple exister par défaut et n'être utilisé que si une classe n'a pas de package destinataire. Le cas échéant, si le nom de package n'est pas mentionné, la classe peut être rangée dans le dernier package « p: » rencontré dans le fichier FIL, par l'outil informatique d'exploitation. Notons que la notion d'ordre intervient ici uniquement pour suppléer à un défaut de syntaxe de la part de l'utilisateur. De même, la déclaration explicite d'une classe avec « c: » peut être omise, en adaptant l'outil d'exploitation de sorte à ce que les classes soient reconnues et déclarées automatiquement à partir d'attributs, d'opérations, d'associations et d'héritages. Le code « c: » est cependant utilisé par l'outil d'exploitation pour le fichier FIL généré en sortie. En revanche, on pourra avantageusement utiliser explicitement le code « c: » pour déclarer une classe avec stéréotype (voir ci-dessous) ou pour forcer l'appartenance d'une classe à un package.

### Exemple 6

c: <<stereotype>>nom de classe[, nom de package]

Ici, une classe est déclarée avec un stéréotype [, et son package d'appartenance]. On peut également associer, si nécessaire, un stéréotype aux packages, aux attributs, aux opérations et aux associations.

### Exemple 7

h: nom de classe 1 est-un nom de classe 2

Dans ce nouvel exemple, un héritage est déclaré, à l'aide d'un mot-clé. Le mot-clé utilisé, nécessaire à la déclaration de l'héritage, est « est-un ». Il convient de noter que le code « h: » peut être omis. S'il n'est pas présent, le code peut être automatiquement ajouté par l'outil informatique d'exploitation, lequel interprète la ligne FIL comme se rapportant à un élément d'héritage, du fait de la présence du mot-clé correspondant. La ligne peut donc être entrée simplement comme dans l'exemple suivant : « carré est-un élément graphique ».

### Exemple 8

o: nom opération, nom de classe

Ici, une opération est déclarée. Une seule virgule est nécessaire, suivie d'un espace.

### Exemple 9

p: nom de package[, package englobant]

Ici, un package est déclaré, comme appartenant au package englobant nommé « package englobant ». La mention du package englobant est optionnelle.

### Exemple 10

r: nom de classe 1 (1..1) nom d'association (1..n) nom de classe 2

Cet exemple illustre une manière de préciser la cardinalité. Deux nombres sont utilisés, à chaque bout de l'association et entre parenthèses. Selon le cas, l'instruction commence par « (1 », « (0 », « (m » ou « (n » et se termine par « 1) » ou « n) ». Un espace est prévu avant et après. En ce qui concerne le nom de l'association ou de la classe, celui-ci peut être quelconque, composé par exemple de un ou plusieurs mots. Là encore, un espace est prévu avant et après ce nom. En outre, si le nom d'association est «est-composé-de» ou «contient», une agrégation pourra automatiquement être générée dans un outil UML utilisé ultérieurement. De plus, de même que le code «h:», le code « r: » n'est pas obligatoire, l'outil informatique d'exploitation étant au besoin adapté à interpréter une association comme telle, en repérant une codification de cardinalité. Par exemple, la ligne « système (1..1) est-composé-de (1..n) sous-système » pourrait directement être interprétée comme décrivant une association « est-composé-de » (agrégation).

### Exemple 11

u: nom de cas d'utilisation, nom de package

La déclaration d'un cas d'utilisation (ou « use case »), permet aussi de déclarer une fonction du système, pouvant correspondre à un ou plusieurs cas d'utilisation.

Considérons l'exemple suivant :
c : chat, exemple
c : souris, exemple
r: chat (1..1) manger (1..n) souris

Selon la notation UML, les clauses ci-dessus se représentent comme suit. Les classes « chat » et « souris » sont typiquement symbolisées par des étiquettes. Des cardinalités correspondantes peuvent figurer à proximité. La relation ci-dessus (r: chat (1..1) manger (1..n) souris) est symbolisée par une flèche reliant les étiquettes.

### II.4 Valorisation de la structure de donnée au format FIL

La simplicité de la notation FIL permet de créer une structure de données (ou un fichier) reflétant cette notation, le cas échéant directement à partir de l'analyse d'un texte écrit en langage naturel. La structure créée pourra ainsi par exemple servir de base à la création d'un objet UML ou à la génération d'un programme source.

En se référant de nouveau à la figure, l'étape de création 110 du modèle objet interne 60 se traduit par une valorisation de la structure de données du MOI.

On entend par « valorisation » que des valeurs correspondant à des données sont stockées (par exemple dans la mémoire vive de l'ordinateur ou sur un support de mémoire de masse). Une structure de données 60 peut de la sorte être exploitée informatiquement.

En particulier, un élément de modélisation peut être représenté (c'est-à-dire transformé informatiquement) en une clause correspondante de la structure de données 60. Notons que différentes variantes algorithmiques peuvent être envisagées. Par exemple, dès qu'un élément de modélisation est isolé (à l'étape de décomposition 100), il est transformé en clause correspondante (étape 110). En variante, les éléments peuvent être transformés en clauses après que chacun d'eux ait été identifié à l'étape 100. Les étapes de décomposition 100 et de création 110 peuvent ainsi être au moins partiellement concomitantes.

### III. Transformation en éléments de modélisation d'un métamodèle externe (création d'un nouveau modèle ou génération de code)

### III.1 Création d'un nouveau modèle, par exemple un modèle XMI

En se référant à présent de nouveau à la figure, le procédé peut comprendre, lors de l'étape de transformation 120, 140 ou après cette étape, une étape de création 120 d'un modèle XMI 70 via un générateur XMI, à partir de la structure de données associée au MOI 60. Ce générateur XMI pourrait par exemple fonctionner selon un principe similaire à celui utilisé par le générateur de code, qui sera décrit ci-après. Après avoir accédé au contenu de la structure de données, le générateur stocke cette structure dans sa propre mémoire interne puis transforme son contenu selon des règles de transformation qui lui sont propres, qui sont paramétrables et qui dépendent des correspondances que l'on veut établir entre deux métamodèles : d'une part le métamodèle de la structure de données FIL elle-même (structure d'entrée), et d'autre part le métamodèle de la structure de données XMI, Java, C# ou C++ par exemple (structure attendue en sortie). Ainsi, l'outil de génération se contente d'appliquer, sur une structure de données stockée en interne, des règles de transformation mettant en correspondance un élément de modélisation d'un métamodèle donné avec un élément de modélisation d'un autre métamodèle.

A cet égard, il existe des outils, tels que Model-In-Action de Sodifrance (voir le site www.mia-software.com), qui permettent de construire de tels générateurs : on décrit les deux métamodèles à l'aide d'UML, puis les règles de transformation en utilisant un langage de haut niveau, et on obtient ainsi très rapidement des transformateurs-générateurs de langage.

Dans le cas présent, le modèle 70 est généré à partir de la structure de données 60 précédemment valorisée. Ensuite, un modèle UML 75 graphique peut être produit à partir du modèle XMI 70 précédent, lors d'une étape de production 130 de modèle. La production d'un modèle UML graphique à partir d'un modèle XMI est, en tant que telle, connue de l'art (on pourra par exemple utiliser des outils tels que Objecteering® de Softeam ou Rhapsody® de i-Logix).

### III.2 Génération de code

Par ailleurs, le procédé selon l'invention peut comprendre une étape de génération 140 d'un code 80, lors de l'étape de transformation 120, 140 ou après cette étape. Lors de l'étape de génération de code, la structure de données est par exemple stockée puis son contenu transformé selon des règles de transformation paramétrables, qui dépendent des correspondances souhaitées entre deux métamodèles, à l'instar de ce qui a été décrit en référence au générateur XMI.

A l'issue de cette étape, des Classes Java ou C# sont générées. Celles-ci peuvent avantageusement être exploitées dans un environnement de développement de services 85 intégré (SDE en anglais). Un environnement de développement de services est un environnement de développement d'applications objet, qui sait lire directement des classes sources Java ou C# par exemple. L'étape 150 est, à cet égard, une simple étape d'import de ces classes 80, correctement générées dans un format lisible directement par l'environnement 85.

Il convient de noter que l'on connaît des outils permettant de générer du code, à partir d'un modèle interne « propriétaire » (par exemple Rational Rose® de IBM, Objecteering® ou Rhapsody®). Les modèles objet internes en question sont généralement propres à chaque constructeur ; ils ne sont pas publiés, pas modifiables et pas exportables.

Pour effectuer une génération de code, les générateurs de code existants se fondent sur des descriptions de plus haut niveau que le niveau du code à produire. Elles reposent souvent sur des modélisations telles qu'UML et lesdits générateurs permettent d'en générer le code dans un langage de programmation donné.

En pratique, l'assistant permet au développeur de choisir le langage cible (par exemple C# ou Java). L'assistant procède alors à une transformation vers le langage cible, grâce à un patron idoine. Des principes de transformation, utiles à la réalisation des patrons de transformation, sont par exemple décrits dans le livre « Design Patterns », Erich Gamma, Richard Helm, Ralph Johnson, John Vlissides, Addison-Wesley Professional, première édition, 1995.

A titre d'exemple, le code source C# généré par l'assistant à partir des scénario/cas d'utilisation précédents est donné ci-après.

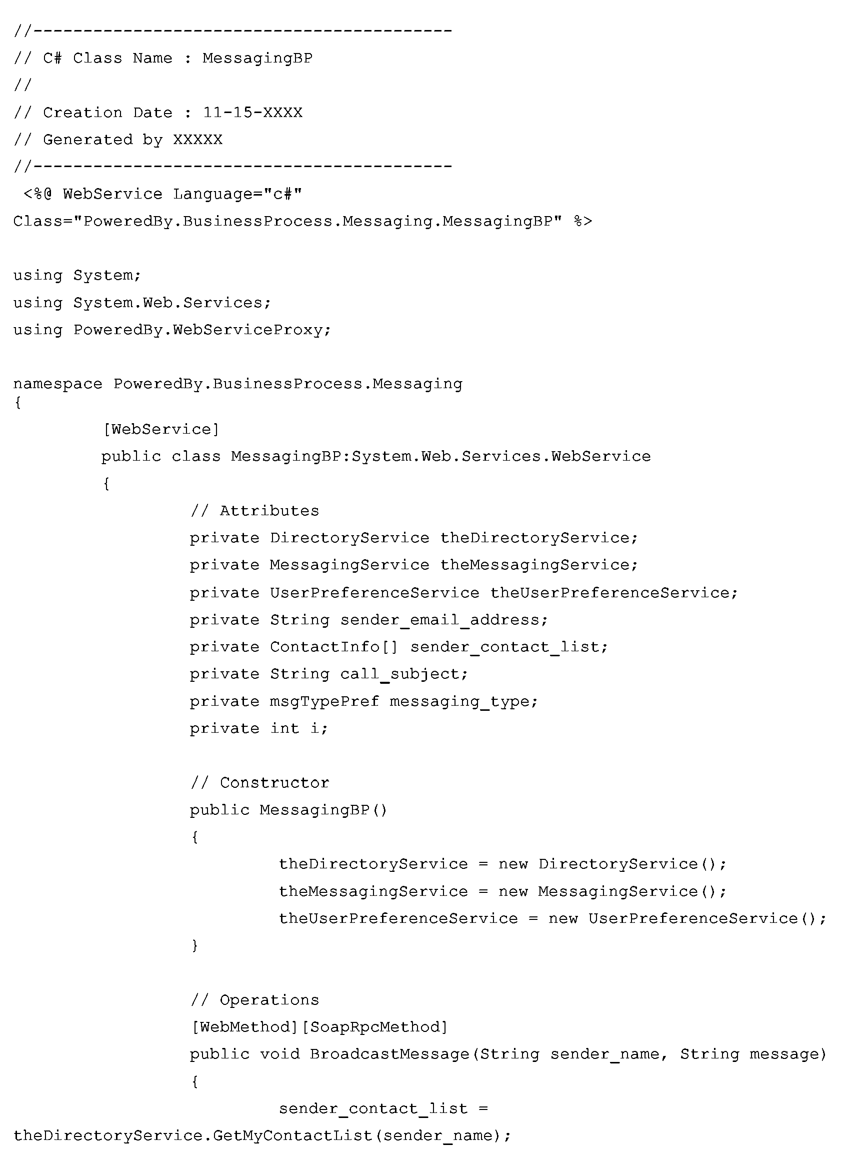

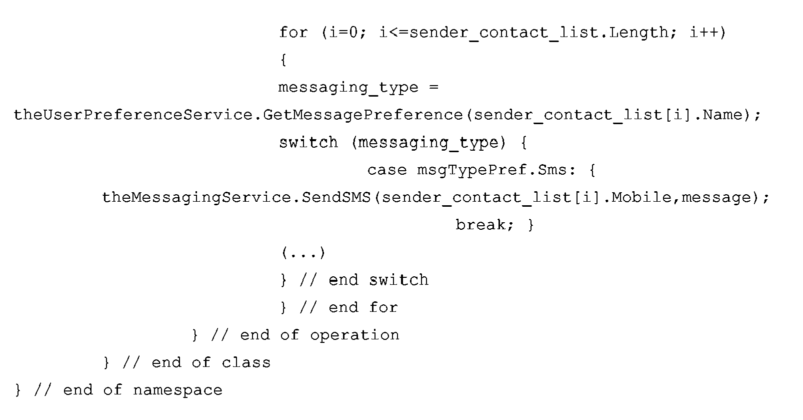

Une fois que le code source a été généré, par exemple en tant que fichier « .asmx », il peut immédiatement être testé par un environnement test connecté à l'assistant.

### III.2 Déploiement

L'ingénieur développeur peut maintenant déployer le service final, en choisissant le type de déploiement souhaité, par exemple Microsoft IIS, Apache/Axis ou BPEL.

Puis, au moyen d'un patron adapté, le code source final du nouveau service est déplacé dans un répertoire approprié. Les « proxies » correspondants sont ensuite produits et déployés. Le nouveau service est alors disponible sur l'Internet ou l'Intranet, selon les caractéristiques de déploiement choisies.

Ainsi, l'invention permet de transformer un texte original imprécis, écrit par l'utilisateur, en un logiciel compilable, exécutable, testable et susceptible d'être déployé.

Il convient de rappeler l'approche globale de l'assistant mettant en oeuvre le procédé de l'invention, qui agrége plusieurs approches élémentaires intéressantes et permet d'améliorer la réalisation de services web. Grâce à l'invention, ces services sont réalisés plus rapidement, à moindre prix et à meilleure qualité. En particulier :
- grâce à l'approche « processus d'interaction », un nouveau service web peut être vu comme une agrégation orchestrée de plusieurs services élémentaires existants ;
- grâce à l'approche multi-acteurs, les différents acteurs - analyste, développeur, etc... - peuvent utiliser l'assistant à différents niveaux ;
- grâce à l'approche multi formes, l'assistant peut lire, transformer, et renverser les textes semi formels ou vagues ;
- grâce à son approche agnostique, le cas d'utilisation et le scénario des processus d'affaire visés sont exprimés indépendamment du langage d'implémentation final ; et
- grâce à l'approche par « élément de modélisation » et MDA, incorporée et masquée, un MOI cohérent est construit, qui est caché à l'utilisateur, lequel n'a plus qu'à manipuler des descriptions de haut niveau.

L'invention n'est cependant pas limitée aux variantes décrites ci-avant mais est susceptible de nombreuses autres variations aisément accessibles à l'homme du métier.

## Revendications

1. Procédé de réalisation d'un nouveau service web, comprenant les étapes de :
- décomposition (100) d'une description textuelle en éléments de modélisation du nouveau service web, conformes à un formalisme de modélisation d'objets ;
- création (110) d'un modèle objet interne (60) à partir des éléments de modélisation ; et
- transformation (120, 140) d'éléments de modélisation du modèle objet interne (60) en éléments de modélisation d'un métamodèle externe.

2. Le procédé de la revendication 1, dans lequel, à l'étape de décomposition (100), la description textuelle comprend un scénario (50) et/ou un cas d'utilisation (50).

3. Le procédé de la revendication 2, dans lequel l'étape de décomposition (100) comprend une analyse grammaticale et/ou sémantique des données.

4. Le procédé de traitement de la revendication 3, dans lequel l'étape de décomposition comprend en outre l'identification, dans le cas d'utilisation :
- d'une description générale du nouveau service web ; et
- de services web existants, susceptibles d'être utilisés par ce service.

5. Le procédé de traitement de la revendication 4, dans lequel l'étape de décomposition comprend en outre :
- l'identification d'acteurs impliqués dans le nouveau services, à partir du cas d'utilisation ; et
- l'extraction d'entrées - sorties du nouveau service, à partir de la description générale du nouveau service web.

6. Le procédé de traitement de la revendication 4 ou 5, dans lequel l'étape de décomposition comprend en outre une réorganisation de phrases du scénario.

7. Le procédé de traitement de la revendication 6, dans lequel l'étape de décomposition comprend en outre une élaboration de phrases logiques à partir des phrases réorganisées du scénario.

8. Le procédé de l'une quelconque des revendications 1 à 7, dans lequel le métamodèle externe est un modèle XMI et dans lequel l'étape de transformation (120, 140) est une étape de création (120) du modèle XMI (70) via un générateur XMI.

9. Le procédé de la revendication 8, comprenant, après l'étape de création (120) du modèle XMI :
- une étape de création (120) d'un modèle UML (75) à partir du modèle XMI (70) créé.

10. Le procédé de l'une quelconque des revendications 1 à 9, comprenant, lors de l'étape de transformation (120, 140) ou après cette étape:
- une étape de génération (140) d'un code (80).

11. Le procédé de l'une quelconque des revendications 1 à 10, dans lequel l'étape de création (110) du modèle objet interne (60) comprend
- une étape de valorisation d'une structure de données (60) du modèle objet interne (60) ;
et dans lequel :
- la structure de données (60) comprend une pluralité de clauses ;
- chacune de ces clauses est associée à un ou plusieurs élément de modélisation du formalisme ; et
- chacune de ces clauses est entièrement déclarative.

12. Le procédé de la revendication 11, dans lequel chacune desdites clauses se rapporte à un seul élément de modélisation.

13. Le procédé de la revendication 12, dans lequel chacune desdites clauses comprend un code relatif à l'élément de modélisation auquel elle se rapporte et des caractéristiques relatives à cet élément de modélisation.

14. Le procédé de la revendication 11, 12 ou 13, dans lequel certaines desdites clauses comprennent des caractéristiques relatives à un conteneur de l'élément de modélisation auquel elle se rapporte.

15. Le procédé de l'une quelconque des revendications 1 à 14, dans laquelle le formalisme de modélisation d'objets est le formalisme UML.

16. Le procédé de l'une quelconque des revendications 1 à 15, dans lequel l'un des élément de modélisation du formalisme est :
- un package ;
- un use case ou cas d'utilisation ;
- une classe ;
- un attribut ;
- une association ; ou
- un héritage.

17. Produit de programme d'ordinateur, adapté à implémenter le procédé de l'une quelconque des revendications 1 à 16.

18. Fichier informatique obtenu selon le procédé de l'une quelconque des revendications 1 à 16.
